# EUROPEAN PATENT SPECIFICATION

(11) **EP 1 925 714 B1**
(45) Date of publication and mention of the grant of the patent: **08.02.2012**
(21) Application number: 06425799.1
(22) Date of filing: 24.11.2006
(51) Int. Cl.: D06F 58/24

(54) **Apparatus and method for controlling the flow of drying air in a laundry drying machine**
Vorrichtung und Verfahren zur Regelung des Trockenluftstroms in einem Wäschetrockner
Appareil et procédé de contrôle du conditionnement du flux d'air de séchage dans une machine de séchage du linge

(43) Date of publication of application: 28.05.2008
(73) Proprietor: Candy S.p.A., 20052 Monza (MI) (IT)
(72) Inventor: Fumagalli, Silvano, 20052 Monza (MI) (IT)
(74) Representative: Perani, Aurelio

(56) References cited:
- EP-A- 1 516 953
- EP-A- 1 541 744
- EP-A- 1 591 579
- EP-A1- 1 408 151
- GB-A- 1 488 720

## Description

The present invention relates to an apparatus and a method for controlling the conditioning of the flow of drying air in a laundry drying machine in which the flow of drying air is caused to circulate in a closed circuit comprising a motor fan adapted to cause the flow to move, a drum containing the laundry to be dried with an associated loading door in the closed position, a battery of heaters adapted to heat the flow of air, a condenser adapted to remove the moisture absorbed by the flow as it passes through the laundry disposed in the drum from the flow and a condensation liquid collection tank, the condenser being impacted on its outer heat exchange surface by a flow of cooling air.

However in accordance with the prior art, it is noted that the heat removed from the flow of drying air by the flow of cooling air at the condensation exchanger is dispersed as the cooling flow is dispersed externally to the laundry drying machine with a consequent loss of energy.

An object of the present invention is therefore, as far as possible, to recover the energy content of the flow of the cooling air of the condenser and to improve the overall energy performance of the machine.

These and other objects set out in further detail in the following description are achieved by the apparatus according to claim 1.

The characteristic features and advantages of the present invention are described in further detail in the following detailed description of a practical embodiment, illustrated by way of non-limiting example with reference to the accompanying drawings, in which:
Fig. 1 is a diagrammatic view of the apparatus of the invention;
Fig. 2 shows the curve, as a function of time, of the temperature of the drying air of the invention in comparison with that which can be obtained with the prior art.

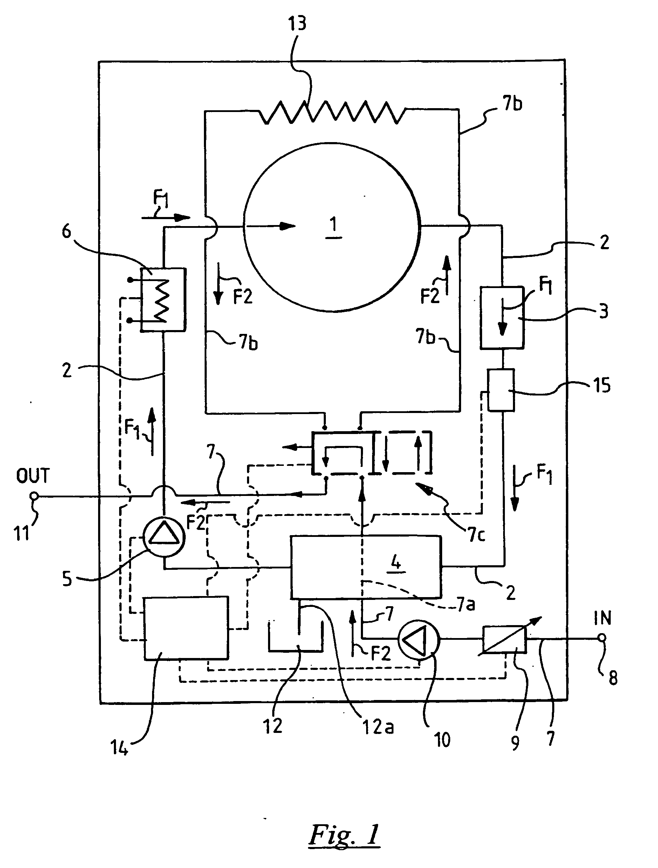

With reference to Fig. 1, the drum of a laundry drying machine, which may be of the static or rotary type, is shown overall by 1. The drum 1 is conventionally provided with a door (not shown) through which the laundry to be dried can be loaded and which can be hermetically closed during operation of the machine.

The drum 1 is disposed in a closed circuit formed by the duct sections 2 for the drying air which comprises a conventional filter 3, a heat exchanger 4 of the air/air type which is adapted to condense the moisture conveyed by the flow of drying air, a motor fan 5 adapted to circulate the flow of air in the circuit, and a heater 6 of conventional type with electrical resistors disposed, for instance, immediately upstream of the drum 1.

The flow of drying air is circulated in the direction of the arrows F1 shown in Fig. 1.

In accordance with the prior art currently known, see EP-A- 1 408 151, for example, the condenser is cooled by a flow of air taken from the ambient atmosphere outside the machine by means of a motor fan unit placed inside a dedicated duct which is provided with a first opening for air intake and a second opening for discharge.

The rate of the cooling flow passing through the duct is controlled by the speed of the motor driving the fan.

Therefore according to the above mentioned prior art it is possible to control the cooling flow of the condenser and, during the initial phase of the operation of the machine, even to stop it until a predetermined condition is met.

The apparatus comprises a further dedicated circuit, formed by duct sections 7, for the flow of cooling air. This further circuit is provided with an opening 8 through which air is taken from the environment surrounding the laundry drying machine, members 9 for regulating the rate of the flow, a motor fan 10 for the generation and propagation of the flow in the ducts 7 and an opening 11 through which the air is again discharged into the environment surrounding the machine.

The circuit formed by the ducts 7 conventionally passes, via a section 7a thereof, through the condensation exchanger 4 so that the outer heat exchange surface thereof is impacted by the flow of cooling air whose direction of flow is shown by the arrows F2 of Fig. 1.

The condensed liquid which is formed in the condenser 4 following cooling conventionally flows into a collection tank 12 connected to the condenser 4 by means of a duct 12a.

Both the air intake opening 8 and the air discharge opening 11 are positioned on the laundry drying machine in positions spaced from one another and preferably in opposing positions, i.e. if the intake opening 8 is disposed on the front side of the machine, the discharge opening 11 is preferably positioned on the rear side.

Although the member 9 for regulating the flow of cooling air is shown disposed between the intake opening 8 and the motor fan 10 in Fig. 1, it could as an alternative be disposed in another position along the circuit formed by the ducts 7 and in particular in the vicinity of the discharge opening 11.

In accordance with an embodiment of the apparatus for conditioning the drying air of the invention, the circuit formed by the ducts 7, as shown in Fig. 1, for the cooling air comprises a circuit 7b supplied by means of a diverter valve 7c within the laundry drying machine. This circuit comprises a heating device 13 disposed in the vicinity of or about the drum 1.

This heating device 13 makes it possible to increase the temperature of the machine environment surrounding the drum 1 and therefore to reduce the heat difference between the interior and the exterior of the drum. This reduces the dispersion of heat from the inside to the outside of the drum 1 thereby keeping the flow of drying air at a higher temperature.

The apparatus of the invention lastly comprises an electronic programming and control unit 14 which is adapted to adjust the member 9 to various open positions between the closed position and the fully open position as a function of an operating program contained therein and stored in a memory and also as a function of the temperature values and levels of moisture of the drying air detected by a conventional sensor 15 disposed on a duct section 2, for instance at the output of the exchanger 4.

This programming and control unit 14 may also control the actuation, stoppage and speed of the motor fan 10, as an alternative to the control member 9, or both.

This programming and control unit 14 is adapted, moreover, to manage the regulation of the heater 6 in order to supply the flow of drying air with the heat that it may need for correct operation and the adjustment of the position of opening of the diverter valve 7c so that the circuit formed by the ducts 7b and the device 13 for heating the machine zone surrounding the drum 1 may or may not be connected.

It will be appreciated from what has been described above that it is possible, during operation of the apparatus, to modulate the flow of cooling air directed to the exchanger 4, firstly because this flow is channelled in the circuit formed by the ducts 7, 7a, 7b and secondly because the rate of this channelled flow may be adjusted by acting on the control member 9 by means of the programming and control unit 14.

The modulation of the flow of cooling air carried out at appropriate times of the machine cycle means that the quantity of heat which may be taken from the drying flow in the exchanger 4 can be adjusted.

In particular, in accordance with the method of the invention, when operation of the machine is started and the drying air in the drum 1 and in the circuit associated therewith has to be brought from ambient temperature to the required temperature and therefore heat has to be provided by the heater 6, the programming and control unit 14 intercepts the member 9 preventing cooling air from reaching the exchange surface of the condenser 4 thereby preventing any unwarranted removal of heat while heating is in progress.

As an alternative, the flow of cooling air may be interrupted by stopping the operation of the motor fan 10. This alternative is possible when the motor fan 10 is an apparatus provided with a motor independent from that of the motor fan 5.

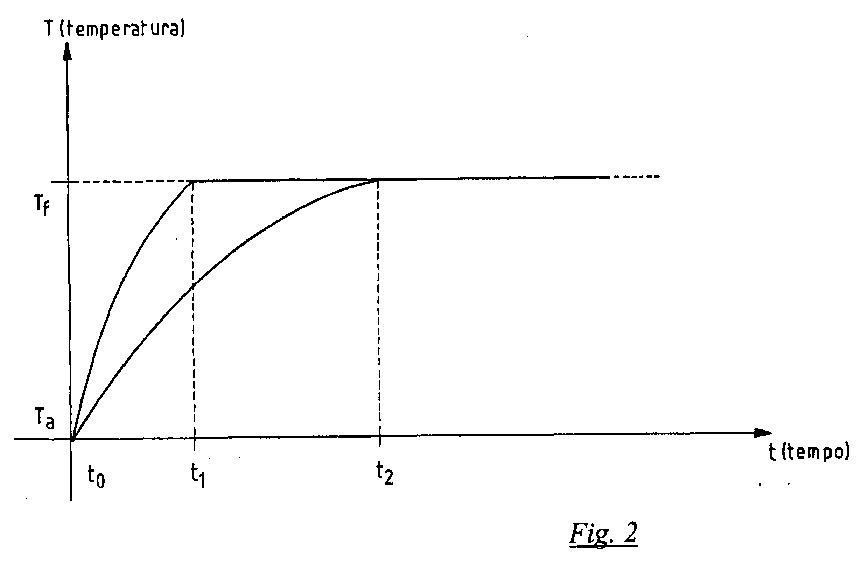

As can be seen from the graphs of Fig. 2, in the case of the apparatus and method of the present invention, the temperature Tf of the flow of drying air of approximately 65°C which is optimum for commencing the operating cycle, for instance, of a domestic laundry drying device, is achieved from an ambient temperature Ta of approximately 20°C in a time t1 of approximately 20 minutes which is substantially half the time t2 needed by a conventional apparatus known from the prior art.

It will be appreciated that these times are linked to the type of load and the quantity of laundry and to the value of the mass of the overall structure of the drying machine.

As soon as the flow of drying air has reached the optimum temperature for beginning drying with the removal of moisture, the control unit 14 actuates the flow of cooling air on the condensation exchanger 4 and also regulates its rate of flow by regulating the interceptor member 9.

The moisture removed from the flow of drying air is conventionally condensed and collected in the tank 12 from which it may be periodically removed.

As the cooling of the flow of drying air causes the temperature of the flow of cooling air to increase, this latter flow may, if desired, in accordance with the apparatus and method of the invention, be conveyed to the heater 13 via the circuit of ducts 7b before being discharged via the discharge opening 11.

The connection of the heater 13 is carried out by the programming and control unit 14 which acts on the diverter valve 7c which is adapted to displace the flow of air into the duct leading to the heater 13 rather than conveying it directly to the discharge opening 11.

In this way, the heat removed from the flow of drying air in order to reduce its temperature and cause the moisture to condense in accordance with the known Mollier moist air diagram is partially re-used to raise or maintain the temperature of the flow of drying air because there is a smaller dispersion of heat between the interior of the drum 1 and the machine environment surrounding it.

It will be appreciated from the above that the apparatus and method of the invention make it possible to achieve substantial savings of energy in a laundry drying machine both by eliminating adverse heat behaviour and by re-using part of the heat content of the cooling flow.

It will be appreciated that variants other than those described and illustrated may be made by a person skilled in the art without thereby departing from the scope of the present invention as set out in the accompanying claims.

## Claims

1. An apparatus for controlling the conditioning of the flow of drying air in a laundry drying machine in which the flow of drying air is caused to circulate in a closed circuit comprising a motor fan (5) adapted to move this flow, a drum (1) containing the laundry to be dried with an associated loading door in the closed position, a battery (6) of heaters adapted to heat the flow of air and a condenser (4) adapted to remove the moisture absorbed by the flow as it passes through the laundry disposed in the drum (1) from the flow, the condenser (4) being impacted on its outer surface by a flow of cooling air, a dedicated duct (7) for this flow of cooling air of the condenser (4), this duct being provided with a first opening (8) for air intake and a second opening (11) for discharge, both openings communicating with the environment outside the laundry drying machine, a section (7a) which surrounds the condenser (4), means (9) for regulating the rate of the flow passing through the duct (7) and motor fan means (10) for the generation and propagation of the flow in the duct (7) **characterised in that** the dedicated duct (7) for the flow of cooling air comprises a circuit (7b) supplied via a diverter valve (7c) which passes through a device (13) for heating the machine environment surrounding the drum (1).

2. An apparatus according to claim 1, **characterised in that** the openings (8, 11) for the intake and discharge of the flow of cooling air of the condenser (4) are positioned on the laundry drying machine.

3. An apparatus according to claim 2, **characterised in that** the discharge opening (11) of the flow of cooling air is positioned remotely from the intake opening (8).

4. An apparatus according to claim 3, **characterised in that** the means (9) for regulating the rate of the flow of cooling air of the condenser (4) are positioned in the duct (7) at the location of at least one of the air intake and discharge openings.

5. An apparatus according to claim 4, **characterised in that** the means (9) for regulating the rate of the flow of cooling air of the condenser (4) are positioned in the duct (7) at the location solely of the air intake opening (8).

6. An apparatus according to claim 5, **characterised in that** it comprises a sensor (15) of the temperature value and the level of moisture of the drying flow and a programming and control unit (14) adapted to control at least the means (9) for regulating the rate of the flow of cooling air of the condenser (4) as a function of the temperature and moisture conditions detected in the drying flow.

7. An apparatus according to claim 6, **characterised in that** the programming and control unit also controls the diverter valve (7c) in order to supply the flow of cooling air directly to the discharge opening (11) or to the device (13) for heating the machine environment surrounding the drum (1).

8. An apparatus according to claim 7, **characterised in that** the programming and control unit (14) also controls the operation of the heater (6) of the flow of drying air and the motor fan (5) for this flow.

9. An apparatus according to claim 8, **characterised in that** the programming and control unit (14) controls the motor fan (10) of the flow of cooling air of the condenser (4).

10. A method of conditioning the flow of drying air in a laundry drying machine in which the flow of drying air is caused to circulate in a closed circuit, comprising a motor fan (5) adapted to move this flow, a drum (1) containing the laundry to be dried with an associated loading door in the closed position, a battery (6) of heaters adapted to heat the flow of air and a condenser (4) adapted to remove the moisture absorbed by the flow as it passes through the laundry disposed in the drum (1) from the flow, the condenser (4) being impacted on its outer surface by a flow of cooling air, the method further comprises the phase of discontinuation of the flow of cooling air to the condenser (4) in the period of time between the starting of the laundry drying machine and the time at which the temperature of the flow of drying air has reached a predetermined optimum temperature for drying of the laundry and, following that time, the phase of generation of this flow of cooling air while modulating its rate of flow and is **characterised in that** it comprises the supply of the flow of cooling air, after it has passed through the condenser (4), to a device (13) for heating the machine environment surrounding the drum (1).

## Patentansprüche

1. Vorrichtung zur Steuerung der Konditionierung des Trockenluftstroms in einer Wäschetrocknungsmaschine, bei welcher der Trockenluftstrom veranlasst ist, in einem geschlossenen Kreislauf zu zirkulieren, aufweisend einen zum Bewegen dieses Stroms geeigneten Motorventilator (5), eine die zu trocknende Wäsche enthaltende Trommel (1) mit einer damit verbundenen Beladungstür in der geschlossenen Position, eine Batterie (6) von zum Erwärmen des Luftstroms geeigneten Heizgeräten, und einen zum Entfernen der von dem Strom bei seinem Durchgang durch die in der Trommel (1) angeordnete Wäsche absorbierten Feuchtigkeit aus dem Strom geeigneten Kondensator (4), welcher Kondensator (4) auf seiner Außenfläche von einem Kühlluftstrom beaufschlagt ist, eine zugeordnete Leitung (7) für diesen Kühlluftstrom des Kondensators (4), wobei diese Leitung eine erste Öffnung (8) zum Lufteinlassen und eine zweite Öffnung (11) zum Auslassen aufweist, wobei beide Öffnungen mit der Umgebung außerhalb der Wäschetrocknungsmaschine kommunizieren, einen Abschnitt (7a), der den Kondensator (4) umgibt, eine Einrichtung (9) zum Regulieren der Rate des durch die Leitung (7) gehenden Stroms und eine Motorventilatoreinrichtung (10) zur Erzeugung und Ausbreitung des Stroms in der Leitung (7), **dadurch gekennzeichnet, dass** die zugeordnete Leitung (7) für den Kühlluftstrom einen über ein Luftabweichungventil (7c) versorgten Kreislauf (7b) aufweist, der durch eine Einrichtung (13) zum Erwärmen der die Trommel (1) umgebenden Maschinenumgebung geht.

2. Vorrichtung nach Anspruch 1, **dadurch gekennzeichnet, dass** die Öffnungen (8, 11) zum Einlassen und Auslassen des Kühlluftstroms des Kondensators (4) auf der Wäschetrocknungsmaschine positioniert sind.

3. Vorrichtung nach Anspruch 2, **dadurch gekennzeichnet, dass** die Auslassöffnung (11) des Kühlluftstroms von der Einlassöffnung (8) entfernt positioniert ist.

4. Vorrichtung nach Anspruch 3, **dadurch gekennzeichnet, dass** die Einrichtung (9) zum Regulieren der Rate des Kühlluftstroms des Kondensators (4) in der Leitung (7) an der Stelle wenigstens einer von der Lufteinlassöffnung und Luftauslassöffnung positioniert ist.

5. Vorrichtung nach Anspruch 4, **dadurch gekennzeichnet, dass** die Einrichtung (9) zum Regulieren der Rate des Kühlluftstroms des Kondensators (4) in der Leitung (7) an der Stelle nur der Lufteinlassöffnung (8) positioniert ist.

6. Vorrichtung nach Anspruch 5, **dadurch gekennzeichnet, dass** sie einen Sensor (15) für den Temperaturwert und den Feuchtigkeitsgrad des Trockenstroms und eine zum Steuern wenigstens der Einrichtung (9) zum Regulieren der Rate des Kühlluftstroms des Kondensators (4) als eine Funktion der im Trockenstrom detektierten Temperatur- und Feuchtigkeitsbedingungen geeignete Programmierungs- und Steuereinheit (14) aufweist.

7. Vorrichtung nach Anspruch 6, **dadurch gekennzeichnet, dass** die Programmierungs- und Steuereinheit auch das Luftabweichungventil (7) steuert, um den Kühlluftstrom direkt der Auslassöffnung (11) oder der Einrichtung (13) zum Heizen der die Trommel (1) umgebenden Maschinenumgebung zuzuführen.

8. Vorrichtung nach Anspruch 7, **dadurch gekennzeichnet, dass** die Programmierungs- und Steuereinheit (14) auch den Betrieb des Heizgeräts (6) des Trockenluftstroms und des Motorventilators (5) für diesen Strom steuert.

9. Vorrichtung nach Anspruch 8, **dadurch gekennzeichnet, dass** die Programmierungs- und Steuereinheit (14) den Motorventilator (10) des Kühlluftstroms des Kondensators (4) steuert.

10. Verfahren zur Konditionierung des Trockenluftstroms in einer Wäschetrocknungsmaschine, bei welcher der Trockenluftstrom veranlasst wird, in einem geschlossenen Kreislauf zu zirkulieren, aufweisend einen zum Bewegen dieses Stroms geeigneten Motorventilator (5), eine die zu trocknende Wäsche enthaltende Trommel (1) mit einer damit verbundenen Beladungstür in der geschlossenen Position, eine zum Erwärmen des Luftstroms geeignete Batterie (6) von Heizgeräten, und einen zum Entfernen der von dem Strom bei seinem Durchgang durch die in der Trommel (1) angeordnete Wäsche absorbierten Feuchtigkeit aus dem Strom geeigneten Kondensator (4), welcher Kondensator (4) auf seiner Außenfläche von einem Kühlluftstrom beaufschlagt wird, wobei das Verfahren weiter aufweist die Phase einer Unterbrechung des Kühlluftstroms zum Kondensator (4) in der Zeitperiode zwischen dem Starten der Wäschetrocknungsmaschine und der Zeit, zu der die Temperatur des Trockenluftstroms eine vorbestimmte optimale Temperatur zum Trocknen der Wäsche erreicht hat, und, auf diese Zeit folgend, die Phase der Erzeugung dieses Kühlluftstroms während eines Modulierens seiner Stromrate, und **dadurch gekennzeichnet ist, dass** es das Zuführen des Kühlluftstroms, nachdem er durch den Kondensator (4) gegangen ist, zu einer Einrichtung (13) zum Erwärmen der die Trommel (1) umgebenden Maschinenumgebung aufweist.

## Revendications

1. Appareil pour contrôler le conditionnement du flux d'air de séchage dans une machine à sécher le linge, dans lequel le flux d'air de séchage est amené à circuler dans un circuit fermé comprenant un ventilateur de moteur (5) adapté pour déplacer ce flux, un tambour (1) contenant le linge à sécher avec une porte de chargement associée dans la position fermée, une batterie (6) d'éléments chauffants adaptés pour chauffer le flux d'air et un condenseur (4) adapté pour retirer l'humidité du flux, absorbée par ce dernier lorsqu'il passe à travers le linge disposé dans le tambour (1), le condenseur (4) étant en contact sur sa surface extérieure avec un flux d'air de refroidissement, un conduit dédié (7) à ce flux d'air de refroidissement du condenseur (4), ce conduit étant prévu avec une première ouverture (8) pour l'admission de l'air et une deuxième ouverture (11) pour la décharge, les deux ouvertures communiquant avec l'environnement extérieur de la machine à sécher le linge, une section (7a) qui entoure le condenseur (4), des moyens (9) pour réguler le débit passant par le conduit (7) et des moyens de ventilateur de moteur (10) pour la génération et la propagation du flux dans le conduit (7), **caractérisé en ce que** le conduit dédié (7) au flux d'air de refroidissement comprend un circuit (7b) alimenté via une soupape de déviation (7c) qui traverse un dispositif (13) pour chauffer l'environnement de la machine entourant le tambour (1).

2. Appareil selon la revendication 1, **caractérisé en ce que** les ouvertures (8, 11) pour l'admission et la décharge du flux d'air de refroidissement du condenseur (4) sont positionnées sur la machine à sécher le linge.

3. Appareil selon la revendication 2, **caractérisé en ce que** l'ouverture de décharge (11) du flux d'air de refroidissement est positionnée à distance de l'ouverture d'admission (8).

4. Appareil selon la revendication 3, **caractérisé en ce que** les moyens (9) pour réguler le débit d'air de refroidissement du condenseur (4) sont positionnés dans le conduit (7) à l'emplacement d'au moins l'une parmi les ouvertures d'admission et de décharge d'air.

5. Appareil selon la revendication 4, **caractérisé en ce que** les moyens (9) pour réguler le débit d'air de refroidissement du condenseur (4) sont positionnés dans le conduit (7) uniquement à l'emplacement de l'ouverture d'admission d'air (8).

6. Appareil selon la revendication 5, **caractérisé en ce qu'**il comprend un capteur (15) de la valeur de température et du niveau d'humidité du flux de séchage et une unité de programmation et de commande (14) adaptée pour commander au moins les moyens (9) pour réguler le débit d'air de refroidissement du condenseur (4) en fonction des conditions de température et d'humidité détectées dans le flux de séchage.

7. Appareil selon la revendication 6, **caractérisé en ce que** l'unité de programmation et de commande, commande également la soupape de déviation, (7c) afin d'amener le flux d'air de refroidissement directement à l'ouverture de décharge (11) ou au dispositif (13) pour chauffer l'environnement de la machine entourant le tambour (1).

8. Appareil selon la revendication 7, **caractérisé en ce que** l'unité de programmation et de commande (14), commande également le fonctionnement de l'élément chauffant (6) du flux d'air de séchage et du ventilateur de moteur (5) pour ce flux.

9. Appareil selon la revendication 8, **caractérisé en ce que** l'unité de programmation et de commande (14) commande le ventilateur de moteur (10) du flux d'air de refroidissement du condenseur (4).

10. Procédé pour conditionner le flux d'air de séchage dans une machine à sécher le linge, dans lequel le flux d'air de séchage est amené à circuler dans un circuit fermé, comprenant un ventilateur de moteur (5) adapté pour déplacer ce flux, un tambour (1) contenant le linge à sécher avec une porte de chargement associée dans la position fermée, une batterie (6) d'éléments chauffants adaptés pour chauffer le flux d'air et un condenseur (4) adapté pour retirer l'humidité du flux absorbée par ce dernier lorsqu'il traverse le linge disposé dans le tambour (1), le condenseur (4) étant en contact sur sa surface externe avec un flux d'air de refroidissement, le procédé comprend en outre l'étape d'interruption du flux d'air de refroidissement vers le condenseur (4) pendant la période de temps située entre le démarrage de la machine à sécher le linge et le temps auquel la température du flux d'air de séchage a atteint une température optimale prédéterminée pour sécher le linge et, après ce moment-là, l'étape de génération de ce flux d'air de refroidissement tout en modulant son débit, et est **caractérisé en ce qu'**il comprend l'alimentation d'un dispositif (13) avec le flux d'air de refroidissement après le passage de ce dernier à travers le condenseur (4), lequel dispositif est destiné à chauffer l'environnement de la machine entourant le tambour (1).
